# EUROPEAN PATENT SPECIFICATION

(11) **EP 3 112 205 B1**
(45) Date of publication and mention of the grant of the patent: **13.06.2018**
(21) Application number: 16177289.2
(22) Date of filing: 30.06.2016
(51) Int. Cl.: B60K 31/00, B60W 30/14, B60B 7/00, B60B 7/04, B60B 19/10, B60T 5/00

(54) **VEHICLE COMPRISING WHEEL ASSEMBLY**
FAHRZEUG MIT RADANORDNUNG
VÉHICULE COMPRENANT UN ENSEMBLE ROUE DE VÉHICULE

(30) Priority: 02.07.2015 GB 201511618
(43) Date of publication of application: 04.01.2017
(73) Proprietor: Nissan Motor Manufacturing (UK) Ltd., Cranfield Bedfordshire MK43 0DB (GB)
(72) Inventor: MUNIZ ORDIERES, Jesus Eladio, 08040 Barcelona (ES)

(56) References cited:
- DE-A1-102014 003 394
- GB-A- 2 492 858
- JP-A- 2009 126 423
- US-A1- 2014 175 858
- US-A1- 2015 069 822

## Description

The present invention relates to a vehicle including at least one wheel assembly and a cruise control system. The invention is particularly, but not exclusively, applicable to motor cars, vans and lorries.

Wheels on vehicles typically include an arrangement of apertures to enable good air flow over the vehicle brakes. This facilitates heat transfer from the brakes to the environment by convection. The apertures help to ensure that the brakes do not overheat; which can cause increased brake pad wear, and reduced brake performance.

However a drawback to having apertures in the wheels is that they generate turbulence during driving, which increases vehicle drag and reduces fuel efficiency.

These problems have been addressed to some extent in KR20070062315, which discloses a wheel assembly including a wheel, a wheel cover having an arrangement of apertures formed therein, a shutting plate that is moveable with respect to the cover, and an actuator for moving the shutting plate with respect to the cover. The actuator is connected to the brake system. When driving normally, the shutting plate is arranged to cover the apertures in the wheel cover, thereby improving fuel efficiency. When the driver operates the brake pedal the actuator moves the shutting plate, to uncover the apertures thereby improving airflow over the brakes. The system includes a return spring which is arranged to move the shutting plate back to the closed position, i.e. to a position where the apertures are covered. A significant drawback to this arrangement is that the actuator is connected to the brake hydraulic system, and has a hydraulic line attached to the shutting plate. This makes the brake system vulnerable to damage, for example if a driver clips a kerb. Since the actuator is connected to the brake hydraulic system, there is a significant risk of brake failure under these circumstances. Also, the default position of the shutter plate is to hide the apertures. The shutter plate only reveals the apertures when the brake pedal is operated. A driver of a car with alloy wheels usually wants to display the wheels whenever possible, since they improve the aesthetic appeal, and perceived value, of the vehicle.

US4593953 discloses a system having a covering plate that is actuated by shape memory materials, which change the orientation of the covering plate when the temperature inside the wheel cover exceeds a predetermined value. This is difficult to achieve reliably in practice, and provides very limited control of the covering plate. US 2014/175858 A1 discloses a vehicle according to the preamble of claim 1.

Accordingly, the invention seeks to provide a wheel assembly that mitigates at least one of the above-mentioned problems, or at least to provide an alternative to known wheel assemblies. The invention also seeks to provide a vehicle including at least one wheel assembly and a cruise control system.

According to the invention, there is provided a vehicle including a vehicle control system; a controller; and at least one wheel assembly, said wheel assembly including a wheel having at least one aperture, a closure member moveably mounted on the wheel, and an actuator arranged to move the closure member relative to the wheel; wherein the controller is arranged to receive an input signal from the vehicle control system and to send a control signal to the actuator according to the input signal received; and wherein, in response to receipt of the control signal, the actuator is arranged to move the closure member to a first position wherein the closure member at least partially covers the aperture(s) and/or to a second position wherein the closure member does not cover the aperture(s); characterized in that the vehicle control system is a cruise control system.

The invention enables a vehicle controller to cover the aperture(s) in the wheels in some driving conditions to improve fuel efficiency, and to not cover; or to uncover; the aperture(s) in other driving conditions to maximise air flow to a braking system. The invention also determines the operating condition of the closure member when the vehicle is stationary. The invention provides a very efficient compact arrangement that can be incorporated into new wheel assemblies and that can be retro-fitted to existing wheels. Use of a wireless link between the vehicle controller and the wheel assembly provides a simple, low cost and safe control system. The wireless link may be a radio link.

Advantageous features of preferred embodiments are disclosed in the dependent claims and in the statements of invention below.

The controller may be arranged to send control signals to the actuator according to the operational status of the cruise control system.

In particular, the controller may be arranged to send a first control signal to the actuator when the cruise control system is activated, and the actuator is arranged to move the closure member to the first position. This helps to increase fuel efficiency when driving in cruise control, which is typically at a relatively high speed when driving on main roads and motorways.

The controller may be further arranged to send a second control signal to the actuator when the cruise control is deactivated, and the actuator is arranged to move the closure member to the second position.

The actuator may be arranged to rotate the closure member about the mounting axis in a forward direction (right side wheels in a clockwise direction, and left side wheels in an anti-clockwise direction; corresponding to wheel rotation as the vehicle is driven forward) when moving from the first position to the second position. This helps to ensure that the closure member uncovers the aperture(s) when braking.

Advantageously, the wheel includes a plurality of apertures; and the closure member is arranged to at least partially cover the plurality of apertures in response to receiving the control signal from the vehicle controller.

In preferred embodiments, the actuator is arranged to move the closure member to the first position in response to a first control signal from the vehicle controller.

In preferred embodiments, the actuator is arranged to move the closure member to the second position in response to a second control signal from the vehicle controller.

In some embodiments, the wireless receiver device may comprise a transceiver device.

Advantageously, the wireless receiver device includes a Bluetooth@ device. The Bluetooth® device is arranged to receive signals from a Bluetooth® device located on the vehicle.

Advantageously, the wireless receiver device is arranged to receive control signals having a frequency in the range from 2.4 to 2.485 GHz.

Advantageously, the wireless receiver device is mounted on at least one of the wheel, the closure member and a mounting member for mounting the closure member onto the wheel. Mounting the wireless receiver device on the mounting member and/or the closure member improves access to the receiver device, for example for maintenance purposes.

Advantageously, the actuator is mounted on at least one of the wheel, the closure member and a mounting member for mounting the closure member onto the wheel. Mounting the actuator on the closure member and/or mounting member improves access to the actuator, for example for maintenance purposes.

In preferred embodiments, the closure member, mounting member, actuator and wireless receiver device form a module that is releasably attachable to the wheel. If the module is damaged, for example by a driver clipping a kerb, the entire module can be replaced. Also, having components mounted on the closure member and/or mounting member (directly or indirectly) enables the module to be retro-fitted to existing wheels.

Advantageously, the closure member is rotatably mounted on the wheel about a mounting axis; and the actuator moves the closure member by adjusting the orientation of the closure member with respect to the wheel about the mounting axis. The mounting axis passes through a central portion of the closure member, and preferably through the centre of the closure member. The closure member is mounted substantially co-axially with the wheel.

The closure member is arranged for limited rotational movement, relative to the wheel. Preferably, the closure member is limited to move from said second position to said first position, and vice versa.

In preferred embodiments, the closure member is rotatably mounted on a mounting member, which is attached to the wheel. The mounting member preferably includes a mounting disk. Preferably, the mounting disk is attached to the wheel by the wheel bolts which affix the wheel to the car; and is arranged co-axially with the wheel.

In preferred embodiments, at least one of the closure member, the mounting member and the wheel includes a slot formed therein, the actuator includes a drive element at least partly located within the slot, and the position and/or orientation of the closure member relative to the wheel is adjusted by adjusting the position of the drive element within the slot. The solenoid or motor is arranged to adjust the position of the drive element within the slot. In preferred embodiments, the slot is formed in the central hub of the closure member; and the actuator is mounted on the mounting member.

In preferred embodiments, the actuator is arranged to rotate the closure member through an angle of less than 60 degrees from the second position to the first position. Preferably, the actuator is arranged to rotate the closure member through an angle of less than 50 degrees; more preferably less than 40 degrees; and more preferably still less than 30 degrees; from the second position to the first position.

In preferred embodiments, the closure member includes a central hub and a plurality of spokes radiating outwardly from the central hub. The central hub is preferably annular, or includes an annular part, and the central hub is rotatably mounted on the mounting member, preferably by a bearing. Preferably, the spokes of the closure member comprise a thin walled structure.

Advantageously, the first position comprises a fully deployed condition for the closure member. In some embodiments in the fully deployed position, at least one portion of the aperture(s) is not covered by the closure member. This is a failsafe arrangement. It ensures that there is always at least one open portion of the or each aperture for air to escape. This facilitates heat transfer from the brake system to the environment by convection, thereby preventing the brakes from overheating, for example when braking suddenly at high speed.

The wheel assembly may include at least one formation, such as a lug, that is arranged to stop relative rotation of the closure member with respect to the wheel.

Advantageously, the actuator includes an electromagnetic actuator device, such as a solenoid device. Additionally, or alternatively, the actuator includes an electric motor, and preferably a direct current motor.

In preferred embodiments, the wheel assembly includes a damper for damping actuation of the closure member. In preferred embodiments, the damper includes a pneumatic damper. For example, the damper can include a bellows arrangement. Advantageously, the actuator includes the damper; for example, the damper is preferably located between the solenoid and the drive element; and is arranged to damp the solenoid's action on the drive element.

Advantageously, the wheel assembly includes electricity supply means. The electricity supply means may include at least one cell, and preferably a rechargeable cell. The electricity supply means may include at least one electrical generator device, such as a piezoelectric device, solar cell, induction system, or a magnet system.

At least part of the electricity supply means may be located on at least one of the wheel, the mounting member and the closure member. In preferred embodiments, the electricity supply means is mounted on the closure member and/or the mounting member.

Advantageously, the wheel assembly includes resilient means arranged to bias the closure member towards the second position.

Advantageously, the wheel includes a central hub, and a plurality of spokes extending radially outwardly from the hub; wherein each aperture is located between an adjacent pair of spokes.

Advantageously, the vehicle includes a controller and a wireless transmitter device, wherein the controller is arranged to send control signals to the actuator via the wireless transmitter device and the wireless receiver device(s). In some embodiments, the wireless transmitter device may comprise a transceiver device.

Advantageously, the wireless transmitter device includes a Bluetooth® device.

Advantageously, the wireless transmitter device is arranged to send control signals having a frequency in the range 2.4 to 2.485 GHz.

Advantageously, the vehicle includes a brake control, such as a brake pedal; and the controller is arranged to send control signals to the actuator according to the operational status of the brake control.

The controller may be arranged to send a control signal to the actuator when the brake control is activated, and the actuator is arranged to move the closure member to the second position. This ensures that the apertures are fully open when the vehicle is braking. This helps to promote heat transfer from the brakes to the environment.

Advantageously, the vehicle includes a clutch control, such as a clutch pedal; and the controller is arranged to send control signals to the actuator according to the operational status of the clutch control.

Advantageously, the vehicle includes a vehicle speed sensor; and the controller is arranged to send control signals to the actuator according to an output from the speed sensor.

The controller may be arranged to issue a first control signal to move the closure member to the first position in response to the output from the vehicle speed sensor reaching a first threshold value. This helps to increase fuel efficiency when driving at a relatively high speed, such as when driving on main roads and motorways.

The controller may be arranged to issue a second control signal to move the closure member to the second position in response to the output from the vehicle speed sensor reaching a second threshold value. Advantageously the first threshold value is different from the second threshold value. This prevents frequent opening and closing of the closure member, by adding a hysteresis factor. In preferred embodiments, the first threshold value is greater than the second threshold value. The difference between the first and second threshold values is preferably at least 10km/h. For example, the first threshold value can be set at 60 km/h and the second threshold value can be set at 50km/h.

Advantageously, the closure member is in the second position when the vehicle is stationary. The controller is arranged to send control signals to ensure that this occurs. The closure member may also default to the second position when the ignition is turned off. The actuators and the vehicle controller may be powered independently of the ignition circuit to allow this; preferably through a timer, to minimize loss of power while the vehicle is parked.

Advantageously, the controller may receive input signals from a forward-facing radar sensor, so as to open the wheel apertures before emergency braking is required; and may also receive input signals from an ambient temperature sensor, so as to open the wheel apertures at a threshold ambient temperature.

An embodiment of the invention will now be described by way of example only with reference to the accompanying drawings, in which:
Figure 1 is a diagrammatic view of a wheel assembly in accordance with the invention, in a closed condition;
Figure 2 is a diagrammatic view of the wheel assembly of Figure 1, in an open condition;
Figure 3 is an isometric view of an outer side of a closure member which forms part of the wheel assembly of Figure 1;
Figure 4 is an isometric view of an inner side of the closure member of Figure 3;
Figure 5 is a detailed view of part of the closure member of Figure 3;
Figure 6 is a detailed view of part of the closure member of Figure 4 showing an actuation system;
Figure 7 is a schematic view of part of the actuation system of Figure 6, which illustrates diagrammatically the location of a pneumatic damper between a solenoid and a drive pin; and
Figures 8 and 9 are schematic views of a vehicle control system, for one wheel (Fig. 8) and for four wheels (Fig. 9) respectively.

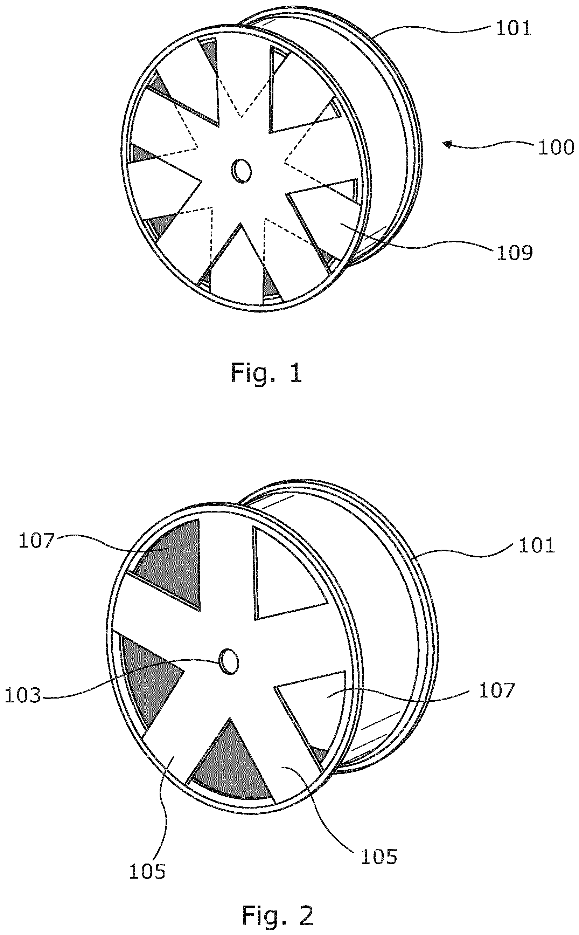

Figure 1 shows diagrammatically a wheel assembly 100 for a vehicle 102 (not shown), in accordance with the invention, in a closed condition. Figure 2 shows diagrammatically the wheel assembly 100 in an open condition.

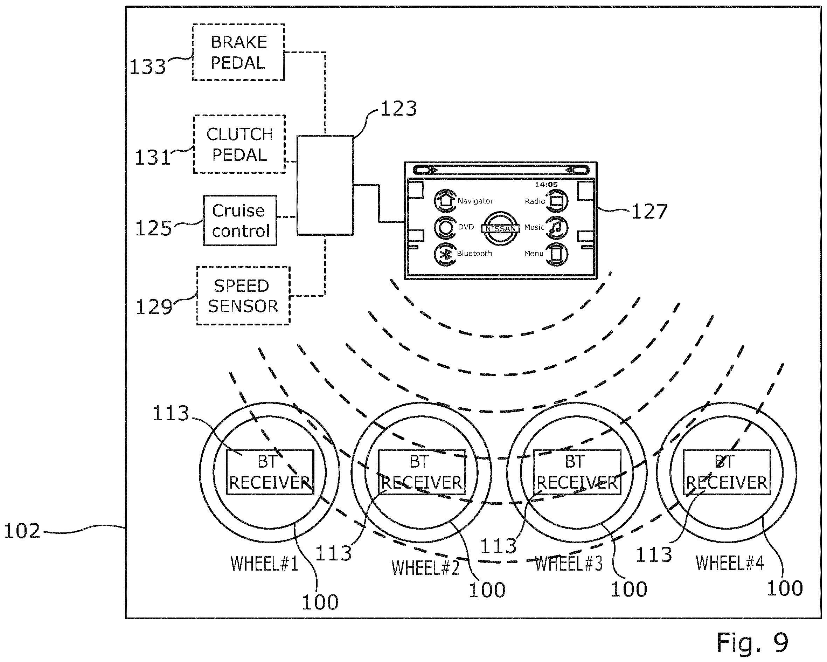

The vehicle 102, for example a motor car, includes a plurality of the wheel assemblies 100; four wheel assemblies 100 are shown in Figure 9. The vehicle 102 can of course be any other suitable type such as a van or a lorry. The number of wheel assemblies 100 is determined according to the type of vehicle.

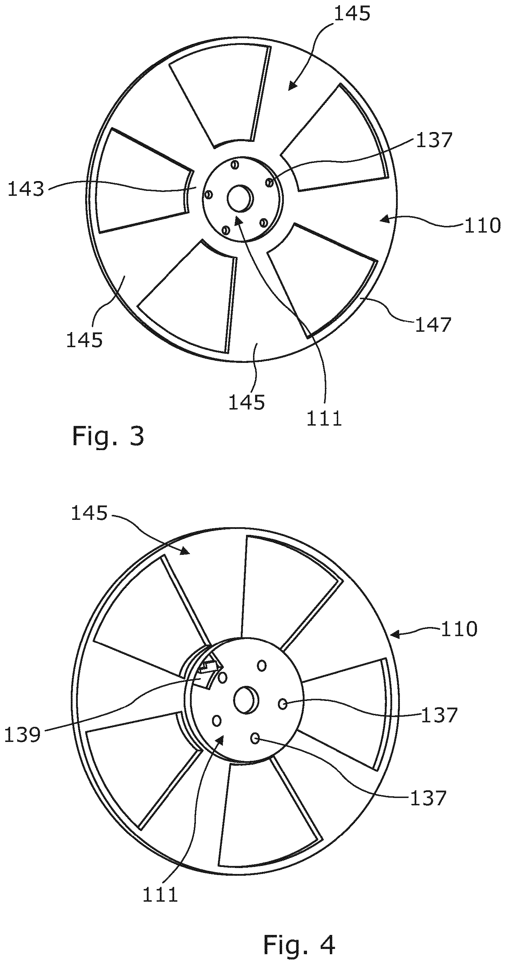

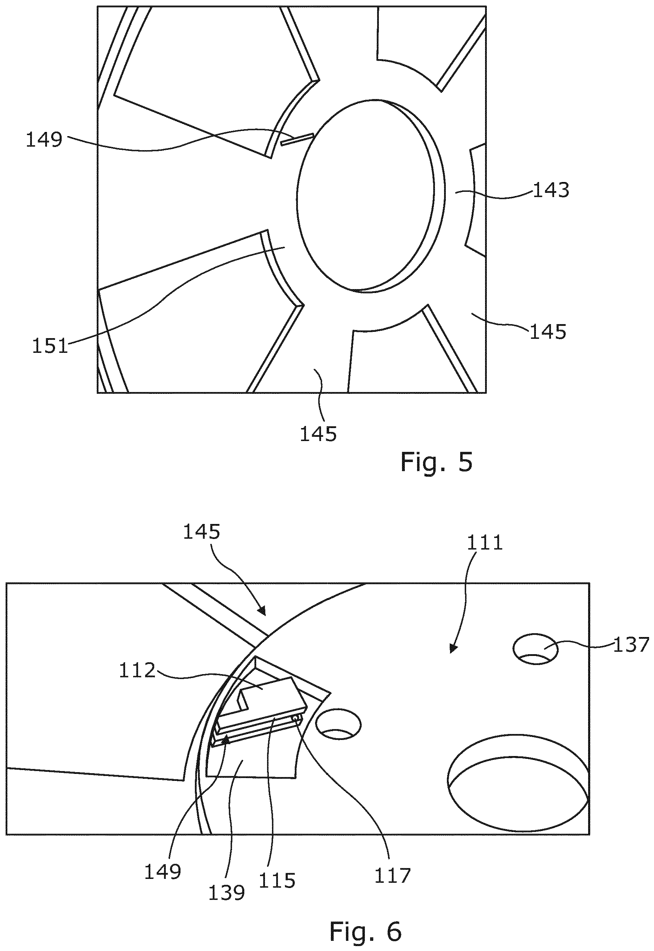

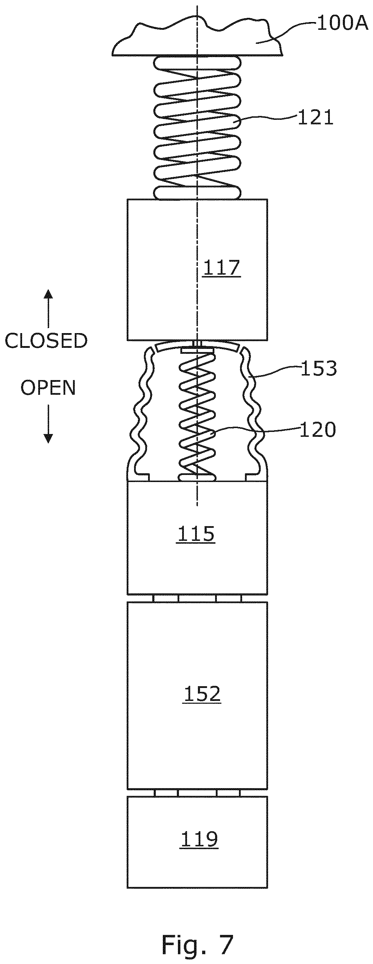

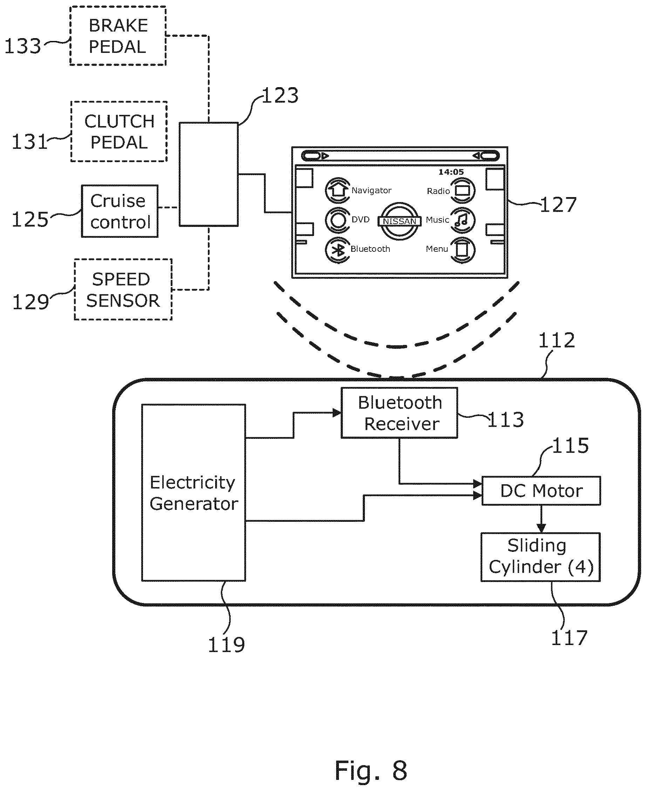

Each wheel assembly 100 includes a wheel 101 having a hub portion 103, a plurality of spokes 105 and a plurality of apertures 107; a closure system 109 having a closure member 110 (Fig. 3), a mounting member 111 and an actuator system 112 (Fig. 6), said actuator system 112 including a Bluetooth® receiver 113 (Fig. 8), an actuator 115, a drive element such as a drive pin 117, an electricity generator 119 (Fig. 8), and optionally a rechargeable cell 152 (Fig. 7) and/or a damper 153.

The vehicle 102 includes a microprocessor controller 123 (Fig. 9) and a Bluetooth® transmitter 127. The controller 123 is arranged to receive input signals from at least one vehicle control and/or at least one vehicle system, and is arranged to generate a control signal for the actuators 115 in response to receipt of at least one of the input signals. The controller 123 transmits the control signal wirelessly to the actuators 115 via the Bluetooth® transmitter 127 and Bluetooth@ receivers 113. The vehicle 102 includes a cruise control system 125 (Fig. 9), and the controller 123 is arranged to receive input signals from the cruise control system 125. The controller 123 is arranged to send a control signal to the actuators 115 in response to receiving an input signal from the cruise control system 125.

Optionally, the controller 123 is arranged to receive input signals from at least one of a speed sensor 129, a clutch system including a pedal 131 and a brake system including a pedal 133 (Fig. 9).

Each wheel aperture 107 (Fig. 2) is located between a pair of adjacent spokes 105. The apertures enable air to flow over a brake mounted adjacent the wheel 101, which helps to transfer heat generated by the brake, in use, to the environment.

The closure system 109 is mounted on the wheel 101. The mounting member 111 comprises a mounting disc having holes 137 for receiving wheel bolts (not shown). Wheel bolts attach the mounting disc 111 to the wheel 101, such that the mounting disc 111 is arranged to rotate with the wheel 101. The mounting disc 111 includes a window 139 (Fig. 4) formed through a peripheral portion of the mounting disc 111. The window 139 provides a mounting space for the actuator system 112. Additionally, or alternatively, a recess may be provided for at least partially housing the actuator system 112.

The closure member 110 is rotatably mounted on the mounting disc 111, preferably by a bearing (not shown). The closure member 110 includes an annular hub 143, which is rotatably mounted on the mounting disc 111; a plurality of spokes 145, each having a narrow end proximal the hub 143 and a wide end distal from the hub 143; and an annular outer rim 147, which connects the spokes 145 together at the distal ends, thereby improving the rigidity of the closure member 110. The number of spokes 145 typically matches the number of major apertures 107 in wheel 101. The annular outer rim may be regarded as providing a sacrificial surface, which may be damaged during kerbing incidents; but which prevents damage to the rim of the alloy wheel. Closure members may be manufactured and sold individually or in sets in different colours and/or surface finishes, so that they can be replaced by a vehicle owner to repair kerbing damage and/or to refresh the look of the vehicle.

The actuator 115 is arranged to control the movement of the closure member 110 with respect to the mounting disc 111, and hence to the wheel 101. The actuator 115 includes an electro-magnetic actuation device, preferably in the form of a solenoid. The actuator 115 is connected to the Bluetooth@ receiver 113, and is arranged to receive electrical control signals from the receiver 113. The actuator 115 is arranged to move the drive pin 117 in response to control signals received from the controller 123, via the Bluetooth® transmitter-receiver pair 127, 113.

The drive pin 117 is slidably mounted in a slot (149, Fig. 5) formed on the inner side 151 of the closure member 110, preferably in the vicinity of the annular hub 143. Adjusting the position of the drive pin 117 within the slot 149 adjusts the rotational orientation of the closure member 110 with respect to the mounting disc 111, and hence the wheel 101. The actuator 115 is arranged to move the closure member 110 to a first position where the spokes 145 are at least partially aligned with the apertures 107 in the wheel (closed condition, Fig. 1); thereby reducing the flow of air through the apertures 107. The actuator 115 is also arranged to move the closure member 110 to a second position wherein the spokes 145 are not aligned with the apertures 107 in the wheel (open condition, Fig. 2); such that the flow of air through the apertures 107 is maximised.

Thus, the relative positions of the spokes 145 and the apertures 107 are determined by adjusting the position of the drive pin 117 within the slot 149.

For arrangements including the damper 153, the damper 153 is preferably in the form of a pneumatic damper, and for example may include a bellows type arrangement where no external air supply is required. The damper 153 is provided to avoid noise and damage caused by sudden actuation of the solenoid. The damper 153 is preferably located between the solenoid 115 and the drive pin 117. This is illustrated schematically in Figure 7, which also shows a spring 120 of sufficient strength to return the damper bellows 153 to its original shape, allowing closure member 110 to be moved from its second (open) position to its first (closed) position without noise and potential damage due to sudden impact against the movement limiting lug (not shown). A return spring 121 is also shown. Although both springs are shown as having constant diameter and pitch for ease of illustration, it will be clear to engineers skilled in mechanical arts that in practice, spring 120 would have to be a rising rate spring, which could be tapered and have a progressive increase in coil pitch. The tapered form would also help to keep the spring stable, and to package it within the bellows 153.

Such a spring would offer low resistance to initial movement of actuator 115, allowing the damper 153 to compress, and starting movement of closure member 110 slowly. The initial rate of spring 120 is lower than that of spring 121, but as spring 120 is compressed by actuator 115, its rate rises to exceed the spring rate of spring 121, which then compresses and allows movement of drive pin 117 until the closure member is fully closed. When actuator 115 is withdrawn, spring 120 expands, so that its spring rate falls below that of spring 121. Spring 121 therefore pushes drive pin 117 back towards actuator 115, which retracts until springs 120 and 121 return to their static lengths, as shown in the Figure; and the closure member is in the second, or open, position. As this is the default position when the vehicle is not in use, it is appropriate for both springs to be in an unstressed, non-compressed condition. It will be noted that damping is applied to movement of closure member 110 in both directions.

In preferred arrangements, the actuator 115 is arranged to rotate the closure member 110, with respect to the mounting disc 111, in a forward (forward motion of vehicle) direction when moving towards the second position. This acts as a failsafe when braking. The actuator 115 is arranged to rotate the closure member 110 in a reverse (reverse motion of vehicle) direction when moving towards the first position.

In preferred arrangements, the actuator 115 is capable of fully deploying the closure member 110; partially deploying the closure member 110; and fully retracting the closure member 110. Of course, the extent to which the apertures 107 are covered by the spokes 145 is partially dependent upon the relative sizes of the apertures 107 and spokes 145. In some arrangements, it is preferred that each spoke 145 has a smaller surface area than its respective aperture 107, such that, even when the closure member 110 is in the fully deployed condition, at least some part of the aperture 107 is not covered by the spoke 145 (see Figure 1). This is a failsafe arrangement to ensure that at least some air can flow through the aperture 107 in a fully deployed condition. This is particularly useful, for example when driving at high speed and the driver applies the brakes suddenly, since a substantial amount of heat is generated by the braking system in a very short period of time. Thus even if the closure member 110 is fully deployed, at least some of the heat from the braking system will be transferred to the environment by convection by air flowing through the open parts of the apertures 107.

Rather than each spoke 145 having a smaller surface area than the apertures 107, a similar effect can be achieved by each spoke 145 having a similar or larger surface area than its respective aperture 107, wherein the closure system 109 is arranged to limit the extent to which the closure member 110 is deployed, and hence to limit the extent to which each spoke 145 covers its respective aperture 107. For example, the length of the slot 149 can be shortened so that the drive pin 117 has a more limited range of movement, thereby preventing the spokes 145 from fully covering the apertures 107. Additionally, or alternatively, at least one stop member, such as a lug, can be provided to limit the relative rotation between the closure member 110 and the mounting disc 111, thereby preventing the spokes 145 from fully covering the apertures 107.

Optionally, the closure unit system 109 can include a return spring (121, Fig. 7), which is arranged to bias the closure member 110 towards the second position. This provides a failsafe arrangement to ensure that the apertures remain open should the closure unit system 109 fail for any reason.

The electricity generator 119 can be of any suitable form and may include at least one solar cell; a piezoelectric device arranged to generate energy from the wheel 101 spinning; a movable magnet which is movable through a coil as the wheel 101 spins; and a brushless induction system powered from the vehicle. There are no electrical wires or brushes for connecting with the vehicle electrical supply. In arrangements not having a battery, if a user forgets to switch off the cruise control 125, and the vehicle is running slowly or is stationary, there is not enough self-generated energy in the closure unit system 109 and the system switches off. Therefore the closure member 110 returns to the second position due to bias of the spring 121.

Optionally, the electricity generation system 119 can include at least one cell 152, such as a rechargeable battery. This helps to ensure that power is provided to the actuator at any required time.

Since the vehicle 102 includes a plurality of wheel assemblies 100, the Bluetooth@ transmitter 127 is paired with each of the Bluetooth@ receivers 113. The controller 123 is arranged to control operation of the closure unit system 109 in each wheel assembly 100 according to the input signals received. The controller 123 sends control signals to each of the actuators 115 via the Bluetooth® transmitter 127 and each respective Bluetooth® receiver 113. The controller 123 is arranged to operate each of the closure unit systems 109 substantially simultaneously.

The microprocessor controller 123 determines the desired operational position of each closure member 110 according to input signals received from the cruise control system 125. When the cruise control system 125 is not activated, no control signal is sent from the microprocessor 123 to the actuator 115; and therefore, the closure member 110 remains in its default second position, since each return spring 121 biases its respective closure member 110 to that position. Thus at low speeds, and when the vehicle is stationary, the apertures 107 in each wheel 101 are fully open. When the cruise control system 125 is activated, typically by a driver operating a manual control, the microprocessor 123 sends a control signal to each actuator 115 to move its respective closure member 110 to the first position wherein the closure member 110 is fully deployed. In each wheel assembly 100, the electricity generator 119 provides the necessary energy to actuate the solenoid, which moves the drive pin 117 within the slot 149. When the closure member 110 is in the first position, the actuator 115 does not require any further energy in order to retain the closure member 110 in the first position. Thus the closure member 110 remains in fully deployed position until an additional control signal is received from the microprocessor 123.

The microprocessor 123 is programmed to move each closure member 110 to the second position in response to the cruise control system 125 being deactivated, either by the driver operating a manual switch; or by the vehicle control system responding to an input signal generated, for example by the user operating the braking system.

Thus while the cruise control system 125 is in operation, the vehicle benefits from higher fuel efficiency by having the apertures 107 at least partially covered by the closure members 110. This helps to increase fuel efficiency when driving in cruise control, which is typically used when driving on main roads and motorways. When the cruise control system 125 is deactivated, the apertures 107 are fully uncovered, which maximises air flow to the brakes. Since cruise control 125 is not normally operated at low speeds, for example during town driving where a lot of braking is required, the system provides good air flow when there is high brake usage.

Although the present invention has been described in connection with specific preferred embodiments, it should be understood that the invention as claimed should not be unduly limited to such specific embodiments. Furthermore, it will be apparent to the skilled person that modifications can be made to the above embodiment that fall within the scope of the invention, for example the closure member 110 and mounting disc 111 can comprise a single piece construction, which is rotatably mounted with respect to the wheel 101, for example via a bearing.

The spokes 145 can be arranged to entirely cover the apertures 107 when in the fully deployed condition.

A short range radio system other than a Bluetooth@ system can be used.

A motor, preferably a D.C. motor, and suitable connector(s) - such as at least one gear - can be used to drive the closure unit in each wheel assembly, for example in place of a solenoid. The or each motor could be a stepper motor.

While the closure member in the above embodiment is arranged for rotational movement relative to the wheel, additionally, or alternatively, the closure member 110 can be arranged to move translationally relative to the wheel to cover / uncover the apertures 107.

The vehicle controller 123 is arranged to receive input signals from at least one of the cruise control system 125, speed sensor 129, the clutch pedal sensor 131 and the brake pedal sensor 133; and to issue control signals to the actuator 115 to control operation of the closure member 110 according to any one, or to any combination, of the input signals.

In response to the controller 123 receiving an input signal from the brake system 133, which indicates that the brake system 133 has been activated, for example when a brake control, such as a brake pedal, is activated; the controller 123 can be arranged to send a control signal to the actuator 115, via the Bluetooth® transmitter (127) and receiver (113) pair, to move the closure element so that it does not cover the aperture(s). This ensures that the apertures 107 are open when the vehicle is braking. This helps promote heat transfer from the brakes to the environment.

In response to the controller 123 receiving an input signal from the clutch system 131, which indicates that the clutch is open, for example when a clutch control, such as a clutch pedal, is activated; the controller can be arranged to send a control signal to the actuator 115, via the Bluetooth® transmitter (127) and receiver (113) pair, to move the closure member 110 to the open position.

In response to the controller 123 receiving an input signal from the speed sensor 129, the controller 123 can be arranged to send control signals to the actuator 115, via the Bluetooth® transmitter (127) and receiver (113) pair, to control movement of the closure member 110. The controller 123 is arranged to issue a first control signal to move the closure member 110 to a position where the apertures 107 are at least partially covered in response to the vehicle speed sensor 129 reaching a first threshold value. This helps to increase fuel efficiency when driving at a relatively high speed; such as, when driving on main roads and motorways.

The controller 123 can be arranged to issue a control signal to move the closure member 110 to the second position where it does not cover the apertures in response to the vehicle speed sensor 129 reaching a second threshold value. The first threshold value is different from the second threshold value. This prevents frequent opening and closing movement of the closure member 110. Typically, the first threshold value is greater than the second threshold value. The difference between the first and second threshold values is typically at least 10km/h. For example, the first threshold value can be set at 60 km/h and the second threshold value can be set at 50km/h.

## Claims

1. A vehicle (102) including a vehicle control system (125); a controller (123); and at least one wheel assembly (100); said wheel assembly including a wheel (101) having at least one aperture (107), a closure member (110) moveably mounted on the wheel, and an actuator (115) arranged to move the closure member relative to the wheel;
wherein the controller (123) is arranged to receive an input signal from the vehicle control system (125) and to send a control signal to the actuator (115) according to the input signal received;
and wherein, in response to receipt of the control signal, the actuator (115) is arranged to move the closure member to a first position wherein the closure member (110) at least partially covers the aperture(s) (107), and/or to a second position wherein the closure member does not cover the aperture(s); **characterized in that**:
the vehicle control system (125) is a cruise control system.

2. A vehicle (102) according to claim 1, wherein the controller (123) is arranged to send a first control signal to the actuator(s) (115) when the cruise control system (125) is activated, and the actuator(s) is/are arranged to move the closure member(s) (110) to the first position.

3. A vehicle (102) according to claim 2, wherein the controller (123) is arranged to send a second control signal to the actuator(s) when the cruise control system (125) is deactivated, and the actuator(s) (115) is/are arranged to move the closure member(s) (110) to the second position.

4. A vehicle (102) according to any preceding claim, wherein in each wheel assembly (100), the actuator (115) is arranged to rotate the closure member (110) about its mounting axis in a forward direction when moving from the first position to the second position.

5. A vehicle (102) according to any preceding claim, wherein each wheel assembly (100) further comprises a mounting member (111) for the closure member (110); and wherein at least one of the closure member, the mounting member and the wheel (101) include(s) a slot (149) formed therein, the actuator (115) includes a drive element (117) at least partly located within the slot, and the position and/or orientation of the closure member (110) relative to the wheel (101) is adjusted by adjusting the position of the drive element (117) within the slot (149).

6. A vehicle (102) according to any preceding claim, wherein in each wheel assembly (100), in the fully deployed position of the closure member (110), at least one portion of the aperture(s) (107) is not covered by the closure member.

7. A vehicle (102) according to any preceding claim, wherein each wheel assembly (100) includes a damper (153) for damping actuation of the closure member (110).

8. A vehicle (102) according to any preceding claim, wherein each wheel assembly (100) includes resilient means (121) arranged to bias the closure member (110) towards the second position.

9. A vehicle (102) according to any preceding claim, wherein each wheel assembly (100) includes a wireless receiver device (113) arranged to receive a wireless control signal from a vehicle wireless transmitter (127), and to provide a control signal to the actuator (115); wherein the wireless receiver device (113) includes a Bluetooth® device.

10. A vehicle (102) according to claim 9 when dependent on claim 5, wherein in each wheel assembly (100), the wireless receiver device (113) and/or the actuator (115) is/are mounted on at least one of the wheel (101), the closure member (110) and the mounting member (111) for mounting the closure member onto the wheel.

11. A vehicle (102) according to any preceding claim, including a brake control (133), wherein the controller (123) is arranged to send a control signal to the or each actuator (115) when the brake control is activated, and the actuator(s) is/are arranged to move the closure member(s) (110) to the second position.

12. A vehicle (102) according to any preceding claim, including a clutch control (131), wherein the controller (123) is arranged to send control signals to the actuator(s) (115) according to the operational status of the clutch control.

13. A vehicle (102) according to any preceding claim, including a vehicle speed sensor (129), wherein the controller (123) is arranged to send control signals to the actuator(s) (115) according to an output from the speed sensor.

14. A vehicle (102) according to claim 13, wherein the controller (123) is arranged to send a first control signal to move the closure member(s) (110) to the first position in response to the output from the vehicle speed sensor (129) reaching a first threshold value.

15. A vehicle (102) according to claim 14, wherein the controller (123) is arranged to issue a second control signal to move the closure member(s) (110) to the second position in response to the output from the vehicle speed sensor (129) reaching a second threshold value, which is lower than the first threshold value.

## Patentansprüche

1. Fahrzeug (102) mit einem Fahrzeugsteuerungssystem (125), einem Steuerelement (123) und mindestens einer Radanordnung (100); wobei die Radanordnung ein Rad (101) mit mindestens einer Öffnung (107), ein beweglich am Rad montiertes Verschlusselement (110) und ein Stellglied (115) aufweist, das so angeordnet ist, dass es das Verschlusselement relativ zu dem Rad bewegt;
wobei das Steuerelement (123) dazu ausgelegt ist, ein Eingangssignal vom Fahrzeugsteuerungssystem (125) zu empfangen und entsprechend dem empfangenen Eingangssignal ein Steuersignal an das Stellglied (115) zu senden;
und wobei als Reaktion auf den Empfang des Steuersignals das Stellglied (115) dazu ausgeführt ist, das Verschlusselement in eine erste Position zu bewegen, in der das Verschlusselement (110) zumindest teilweise die Öffnung(en) (107) abdeckt, und/oder in eine zweite Position, in der das Verschlusselement die Öffnung(en) nicht abdeckt;
**dadurch gekennzeichnet, dass**:
das Fahrzeugsteuerungssystem (125) ein Geschwindigkeitsregelsystem ist.

2. Fahrzeug (102) nach Anspruch 1, wobei das Steuerelement (123) so angeordnet ist, dass es ein erstes Steuersignal an das/die Stellglied(er) (115) sendet, wenn das Geschwindigkeitsregelsystem (125) aktiviert wird, und wobei das/die Stellglied(er) dazu ausgelegt ist/sind, das/die Verschlusselement(e) (110) in die erste Position zu bewegen.

3. Fahrzeug (102) nach Anspruch 2, wobei das Steuerelement (123) so angeordnet ist, dass es ein zweites Steuersignal an das/die Stellglied(er) sendet, wenn das Geschwindigkeitsregelsystem (125) deaktiviert wird, und wobei das/die Stellglied(er) (115) dazu ausgeführt ist/sind, das/die Verschlusselement(e) (110) in die zweite Position zu bewegen.

4. Fahrzeug (102) nach einem der vorhergehenden Ansprüche, wobei in jeder Radanordnung (100) das Stellglied (115) dazu ausgelegt ist, das Verschlusselement (110) in einer Vorwärtsrichtung um seine Befestigungsachse zu drehen, wenn es sich von der ersten Position in die zweite Position bewegt.

5. Fahrzeug (102) nach einem der vorhergehenden Ansprüche, wobei jede Radanordnung (100) ferner ein Befestigungselement (111) für das Verschlusselement (110) umfasst;
und wobei mindestens eines aus Verschlusselement, Befestigungselement und Rad (101) einen darin ausgebildeten Schlitz (149) aufweist, das Betätigungselement (115) ein zumindest teilweise innerhalb des Schlitzes angeordnetes Antriebselement (117) aufweist und die Position und/oder Ausrichtung des Verschlusselements (110) relativ zu dem Rad (101) durch Einstellen der Position des Antriebselements (117) innerhalb des Schlitzes (149) eingestellt wird.

6. Fahrzeug (102) nach einem der vorhergehenden Ansprüche, wobei in jeder Radanordnung (100) in der vollständig ausgefahrenen Position des Verschlusselements (110) mindestens ein Abschnitt der Öffnung(en) (107) nicht vom Verschlusselement abgedeckt ist.

7. Fahrzeug (102) nach einem der vorhergehenden Ansprüche, wobei jede Radanordnung (100) einen Dämpfer (153) zum Dämpfen der Betätigung des Verschlusselements (110) aufweist.

8. Fahrzeug (102) nach einem der vorhergehenden Ansprüche, wobei jede Radanordnung (100) elastische Mittel (121) aufweist, die dazu ausgeführt sind, das Verschlusselement (110) in Richtung der zweiten Position zu drücken.

9. Fahrzeug (102) nach einem der vorhergehenden Ansprüche, wobei jede Radanordnung (100) eine drahtlose Empfängervorrichtung (113) umfasst, die dazu ausgelegt ist, ein drahtloses Steuersignal von einem drahtlosen Fahrzeugsender (127) zu empfangen und ein Steuersignal an das Stellglied (115) abzugeben; wobei die drahtlose Empfängervorrichtung (113) eine Bluetooth®-Vorrichtung umfasst.

10. Fahrzeug (102) nach Anspruch 9, sofern von Anspruch 5 abhängig, wobei in jeder Radanordnung (100) die drahtlose Empfangseinrichtung (113) und/oder das Stellglied (115) an mindestens einem aus Rad (101), Verschlusselement (110) und Befestigungselement (111) zur Befestigung des Verschlusselements am Rad angebracht ist/sind.

11. Fahrzeug (102) nach einem der vorhergehenden Ansprüche, das eine Bremssteuerung (133) umfasst, wobei das Steuerelement (123) so ausgelegt ist, dass es ein Steuersignal an das oder jedes Stellglied (115) sendet, wenn die Bremssteuerung aktiviert wird, und wobei das/die Stellglied(er) so ausgeführt ist/sind, dass es/sie das/die Verschlusselement(e) (110) in die zweite Position bewegt.

12. Fahrzeug (102) nach einem der vorhergehenden Ansprüche, umfassend eine Kupplungssteuerung (131), wobei das Steuerelement (123) dazu ausgelegt ist, Steuersignale an das/die Stellglied(er) (115) entsprechend dem Betriebszustand der Kupplungssteuerung zu senden.

13. Fahrzeug (102) nach einem der vorhergehenden Ansprüche, das einen Fahrzeuggeschwindigkeitssensor (129) umfasst, wobei das Steuerelement (123) so ausgeführt ist, dass es Steuersignale entsprechend einer Ausgabe des Geschwindigkeitssensors an das/die Stellglied(er) (115) sendet.

14. Fahrzeug (102) nach Anspruch 13, wobei das Steuerelement (123) dazu ausgelegt ist, ein erstes Steuersignal zu senden, um das/die Verschlusselement(e) (110) in Reaktion auf die Ausgabe des Fahrzeuggeschwindigkeitssensors (129) bezüglich des Erreichens eines ersten Schwellenwertes in die erste Position zu bewegen.

15. Fahrzeug (102) nach Anspruch 14, wobei das Steuerelement (123) dazu ausgelegt ist, ein zweites Steuersignal abzugeben, um das/die Verschlusselement(e) (110) in Reaktion auf die Ausgabe des Fahrzeuggeschwindigkeitssensors (129) bezüglich des Erreichens eines zweiten Schwellenwertes, der niedriger als der erste Schwellenwert ist, in die zweite Position zu bewegen.

## Revendications

1. Véhicule (102) comportant un système de régulation de véhicule (125) ; un dispositif de régulation (123) ; et au moins un ensemble roue (100) ; ledit ensemble roue comportant une roue (101) et ayant au moins une ouverture (107), un organe de fermeture (110) monté mobile sur la roue, et un actionneur (115) agencé pour déplacer l'organe de fermeture par rapport à la roue ;
dans lequel le dispositif de régulation (123) est agencé pour recevoir un signal d'entrée en provenance du système de régulation de véhicule (125) et pour envoyer un signal de régulation à l'actionneur (115) selon le signal d'entrée reçu ;
et dans lequel, en réponse à la réception du signal de régulation, l'actionneur (115) est agencé pour déplacer l'organe de fermeture à une première position dans laquelle l'organe de fermeture (110) couvre au moins partiellement l'ouverture ou les ouvertures (107), et/ou à une seconde position dans laquelle l'organe de fermeture ne couvre pas l'ouverture ou les ouvertures ;
**caractérisé en ce que** :
le système de régulation de véhicule (125) est un système de régulation de vitesse.

2. Véhicule (102) selon la revendication 1, dans lequel le dispositif de régulation (123) est agencé pour envoyer un premier signal de régulation à l'actionneur ou aux actionneurs (115) lorsque le système de régulation de vitesse (125) est activé, et l'actionneur ou les actionneurs est/sont agencé(s) pour déplacer l'organe ou les organes de fermeture (110) à la première position.

3. Véhicule (102) selon la revendication 2, dans lequel le dispositif de régulation (123) est agencé pour envoyer un second signal de régulation à l'actionneur ou aux actionneurs lorsque le système de régulation de vitesse (125) est désactivé, et l'actionneur ou les actionneurs (115) est/sont agencé(s) pour déplacer l'organe ou les organes de fermeture (110) à la seconde position.

4. Véhicule (102) selon l'une quelconque des revendications précédentes, dans lequel dans chaque ensemble roue (100), l'actionneur (115) est agencé pour mettre en rotation l'organe de fermeture (110) autour de son axe de montage dans une direction avant lors d'un déplacement de la première position à la seconde position.

5. Véhicule (102) selon l'une quelconque des revendications précédentes, dans lequel chaque ensemble roue (100) comprend en outre un organe de montage (111) pour l'organe de fermeture (110) ; et
dans lequel au moins l'un de l'organe de fermeture, de l'organe de montage et de la roue (101) comporte une fente (149) formée à l'intérieur, l'actionneur (115) comporte un élément d'entraînement (117) situé au moins partiellement au sein de la fente, et la position et/ou l'orientation de l'organe de fermeture (110) par rapport à la roue (101) sont réglées en réglant la position de l'élément d'entraînement (117) au sein de la fente (149).

6. Véhicule (102) selon l'une quelconque des revendications précédentes, dans lequel dans chaque ensemble roue (100), dans la position totalement déployée de l'organe de fermeture (110), au moins une portion de l'ouverture ou des ouvertures (107) n'est pas couverte par l'organe de fermeture.

7. Véhicule (102) selon l'une quelconque des revendications précédentes, dans lequel chaque ensemble roue (100) comporte un amortisseur (153) pour amortir un actionnement de l'organe de fermeture (110).

8. Véhicule (102) selon l'une quelconque des revendications précédentes, dans lequel chaque ensemble roue (100) comporte un moyen résilient (121) agencé pour solliciter l'organe de fermeture (110) vers la seconde position.

9. Véhicule (102) selon l'une quelconque des revendications précédentes, dans lequel chaque ensemble roue (100) comporte un dispositif récepteur sans fil (113) agencé pour recevoir un signal de régulation sans fil en provenance d'un émetteur sans fil de véhicule (127), et pour fournir un signal de régulation à l'actionneur (115) ; dans lequel le dispositif récepteur sans fil (113) comporte un dispositif Bluetooth®.

10. Véhicule (102) selon la revendication 9 lorsqu'elle dépend de la revendication 5, dans lequel dans chaque ensemble roue (100), le dispositif récepteur sans fil (113) et/ou l'actionneur (115) est/sont monté(s) sur au moins l'un de la roue (101), de l'organe de fermeture (110) et de l'organe de montage (111) pour monter l'organe de fermeture sur la roue.

11. Véhicule (102) selon l'une quelconque des revendications précédentes, comportant un régulateur de frein (133), dans lequel le dispositif de régulation (123) est agencé pour envoyer un signal de régulation à l'actionneur ou à chaque actionneur (115) lorsque le régulateur de frein est activé, et l'actionneur ou les actionneurs est/sont agencé(s) pour déplacer l'organe ou les organes de fermeture (110) à la seconde position.

12. Véhicule (102) selon l'une quelconque des revendications précédentes, comportant un régulateur d'embrayage (131), dans lequel le dispositif de régulation (123) est agencé pour envoyer des signaux de régulation à l'actionneur ou aux actionneurs (115) selon le statut opérationnel du régulateur d'embrayage.

13. Véhicule (102) selon l'une quelconque des revendications précédentes, comportant un capteur de vitesse de véhicule (129), dans lequel le dispositif de régulation (123) est agencé pour envoyer des signaux de régulation à l'actionneur ou aux actionneurs (115) selon une sortie provenant du capteur de vitesse.

14. Véhicule (102) selon la revendication 13, dans lequel le dispositif de régulation (123) est agencé pour envoyer un premier signal de régulation pour déplacer l'organe ou les organes de fermeture (110) à la première position en réponse à la sortie provenant du capteur de vitesse de véhicule (129) atteignant une première valeur seuil.

15. Véhicule (102) selon la revendication 14, dans lequel le dispositif de régulation (123) est agencé pour émettre un second signal de régulation pour déplacer l'organe ou les organes de fermeture (110) à la seconde position en réponse à la sortie provenant du capteur de vitesse de véhicule (129) atteignant une seconde valeur seuil, qui est inférieure à la première valeur seuil.
